# EUROPEAN PATENT APPLICATION

(11) **EP 1 160 294 A2**
(43) Date of publication of application: **05.12.2001**
(21) Application number: 01304744.4
(22) Date of filing: 30.05.2001
(51) Int. Cl.: C09C 1/40, C09C 1/42

(54) **Method for improving the high and low shear rheology of mineral slurries and the products derived therefrom**

(30) Priority: 31.05.2000 US 208238 P
(71) Applicant: Imerys Kaolin, Inc., Roswell, Georgia 30076 (US)
(72) Inventor: Bilimoria, Bomi M., Macon, Georgia 31210 (US)
(74) Representative: Nash, David Allan

(57) **Abstract**

The present invention provides several methods for improving the high and low shear rheology of a substantially grit-free and substantially dispersed particulate slurry using a rotor-stator type mill. The methods are applicable to slurries including a natural mineral, suspensions including a natural mineral, and suspensions including synthetic minerals. The methods of the present invention selectively include performance of one or more of the processes of beneficiation, re-milling, dewatering and re-dispersion, and drying, performed in any one of several sequences as disclosed or suggested herein. The present invention further provides a number slurry products having an improved high and/or low shear rheology that are produced by the performance of different combinations of these methods.

## Description

### Field of the Invention

The present invention relates to the field of mineral slurries and mineral slurry products used in the coatings industry. More particularly, the present invention relates to methods for improving the high and low shear rheology or viscosity of kaolin clay slurries by processing the kaolin clay slurries using a rotor-stator mill.

### Background of the Invention

Kaolin clay is the most widely used pigment for coating applications because it is low in cost, reasonably white and readily available worldwide. Unlike other coating pigments, kaolin is mined from deposits found around the world and processed to make a suitable product. Major sources of kaolin clay are found in the United States, England, Brazil and Australia. As kaolin clays are natural minerals, the quality and type of the kaolin product produced is typically a reflection of the source of the kaolin crude that is mined and the geology of the crude source.

Kaolin clays for coating applications are typically classified by the crude source and how the deposit was formed, the method by which the clay is processed, its use and its product characteristics. Based on their clays and sub-classified within each group according to the importance of these properties. The major physical characteristics of kaolin clays for paper, for example, are median particle size, shape, the distribution of particle size, brightness and rheology in water at high solids. Particle size is typically determined by sedimentation methods based on Stokes law and is measured in terms of equivalent spherical diameter, or e.s.d., as determined by Sedigraph, and is expressed in terms of "percent less than 2 µm e.s.d., as a single number measurement of particle fineness. Brightness is typically determined on a GE scale, where it is measured as a percent brightness relative to magnesium oxide (MgO). The rheology or viscosity of clay in water generally relates to the viscosity of the coating formulation. In most cases, a coating formulation having the lowest possible viscosity at the highest solids is most desirable for good runnability at high speeds. Viscosity is typically measured at low shear with a Brookfield viscometer and at high shear by using a Hercules viscometer. Higher-shear viscosity more typically relates to coating behavior on the machine as very high shear rates are developed on modern high-speed coaters.

As kaolin clays are typically a reflection of the crude source and the geology of the area surrounding the deposit, clay manufacturers and distributors have historically had limited ability to alter the rheology of the kaolins to facilitate their shipment or use without adversely impacting the clay's natural physical characteristics. Methods known in the art for improving a kaolin's viscosity include altering its solids content, its dispersion state, the presence of mineral impurities in the clay, the ionic environment surrounding the particles, and the particle size distribution of the clay.

Each of the methods heretofore known for improving a kaolin's viscosity typically have some adverse impact on the very qualities of the kaolins that make them an attractive paper coating source. Altering the solids content by adding fines to a slurry, for example, improves the Hercules viscosity of the clay slurry but typically results in a significant increase in the Brookfield values of the slurry. "Pugging" is another process used for improving the clay's rheology. However, this process sometimes increases the Brookfield viscosity. Another limitation of pugging is that the process only works at extremely high solids, for example 75 % solids or higher. Altering the particle size distribution and shape of the clay by grinding, for example, adversely affects its Hercules values. In short, the very characteristics that have made kaolins desirable for use in the coatings industry have impeded efforts to improve its rheology and render it even more useful in the industry.

The present invention provides a number of novel methods for improving the high and low shear rheology of clay and a number of novel clay products produced by these methods not heretofore known in the industry. The methods of the present invention overcome the limitations in improving the rheology of clays heretofore known in the art. The methods of the present invention enable production of a clay slurry having an improved high shear rheology to facilitate the use of the clay at the high speeds needed for running a coating machine. These methods thereby also enable the production of a better kaolin clay product. The methods of the present invention further enable the production of a clay slurry having an improved low shear rheology that enables its shipment at higher solids. These methods thereby further enable a decrease in the costs of transportation of the kaolin clay product.

The improved high shear rheology clay products of the present invention have the unique characteristics of improved runnability over clays known and used in the art. The improved low shear rheology clay products of the present invention have the unique characteristics of lower water content and higher solids over clays known and used in the art. The present invention offers advantages over the prior art by providing means for improving the high and low shear rheology of clay slurry products in a single mechanism and through methods for use of that mechanism. The methods of the present invention are applicable to a broad range of clays and are particularly effective in applications directed to kaolin clays. The methods of the present invention are also effective in creating valuable product from both high and low quality clays and are particularly effective in the production of coating clays.

### SUMMARY OF THE INVENTION

The present invention provides several methods for improving the high shear and low shear rheology of a slurry product by processing a slurry using a rotor-stator type mill to produce the slurry product. These methods are widely adaptable for improving the rheology of a broad range of products including those generated from a slurry including a natural mineral, and a slurry including a synthetic mineral. In each instance, the highest quality slurry product is produced where the initial particulate slurry that is processed according to the methods of the present invention is substantially grit-free and substantially dispersed. A substantially grit-free material is one in which the majority of the particles are less than 325 mesh or 45 microns. A substantially dispersed material is one which is fluid.

In a first method of the present invention, the substantially grit free and substantially dispersed slurry is subjected to the step of milling the clay slurry in a rotor-stator mill and then beneficiating it to improve the brightness and modify the shape and median particle size by mechanical, thermal or chemical treatment. The milled and beneficiated product is then dewatered to produce a slurry using the technique of filtration and evaporation. As an alternative, the filtered product may be dried in the acid flocculated state or it may be redispersed and then dried using a spray dryer. Slurries may also be produced by mixing the dried products in water in the presence of a dispersant.

In a second method of the present invention, the method includes the step of beneficiating the mineral prior to the step of milling the slurry in a rotor-stator type mill. The beneficiated and milled particulate slurry is dewatered and dried in accordance with the processes described above. Slurries can also be prepared in accordance with the processes described above.

In a third method of the present invention, the method includes the step of beneficiating the mineral followed by dewatering it using a filter, then redispersing the filter cake prior to milling the slurry in a rotor-stator type mill. The beneficiated, dewatered and milled particulate slurry is dried in accordance with the processes described above. Slurries can also be prepared in accordance with the processes described above.

In a fourth method of the present invention, the method includes the step of beneficiating, dewatering and evapoarting the slurry to a higher solids level and then milling the slurry in a rotor-stator type mill.

In a fifth method of the present invention, the method includes the step of beneficiating, dewatering, and drying the mineral. The mineral is then mixed with water and dispersant to produce a slurry which is then milled in a rotor-stator type mill.

Slurry products are derived from each of the terminal steps of each of the methods for improving the high and low shear rheology of a slurry product described above. The improved product may also be shipped in the dry form following the process described in methods 1, 2, and 3.

### DESCRIPTION OF THE EMBODIMENTS

As used in the specification and the claims, "a" can mean one or more, depending upon the context in which it is used.

The present invention provides several methods for improving the high shear and low shear rheology of a slurry product by processing a slurry using a rotor-stator type mill to produce the slurry product. These methods are widely adaptable for improving the rheology of a broad range of slurry products and yield the greatest benefit in applications where the slurry compositions are substantially grit-free and substantially dispersed. In the context of the present invention, a slurry is substantially grit free where the particle size of the slurry material is no greater than 325 mesh.

The methods of the present invention are applicable to substantially grit-free and substantially dispersed slurries including a natural mineral dispersed in a slurry and a synthetic mineral dispersed in a slurry. Illustrations of the efficacy of the methods of the present invention in improving the high and low shear rheology of kaolin clays are provided by the Examples included in this specification. Still other applications of these methods will be equally foreseeable, based upon an understanding of the teachings of the present invention.

Where the methods of the present invention are applied to a natural mineral dispersed in a slurry, a substantially grit-free and substantially dispersed slurry is formed by substantially dispersing the slurry in a dispersant and water at an alkaline pH before it is processed in the rotor-stator mill. The dispersant is selected from the group of dispersants consisting of phosphates, polyacrylates, silicates, sulfonates and ligno-sulfates and the alkaline substance is selected from the group of alkaline substances consisting at least of soda ash, sodium hydroxide and ammonium hydroxide. Still other dispersants and alkaline substances which are equally effective in performance of the methods of the present invention will be known to those skilled in the art. The substantially grit-free and substantially dispersed slurry of the present invention is preferably substantially dispersed in sodium polyacrylate, soda ash and water.

Where the methods of the present invention are applied to a synthetic mineral, a substantially grit-free and substantially fluid particulate suspension is formed by substantially dispersing the mineral in an aqueous media before it is processed in the rotor-stator mill. The aqueous media can be formed from water, water and a dispersant or water, a dispersant and a pH-control agent.

Control over conditions during which the slurry product is processed greatly enhances the quality of the slurry product produced. Accordingly, an important aspect of the present invention is control over these conditions. Among the conditions preferably controlled during this process are the milling time, pH of the slurry and the percent solids at which the slurry is processed. The pH of the slurry in the present invention is preferably controlled by measurement according to the "in-processing pH method." The "in-processing pH method" is defined is as follows:

### Procedure for Measuring pH of Slip During Processing ("In-Processing pH Method"):

*1. Equipment and Reagents*
   1. Corning model or Beckman portable model pH meter with gel filled combination electrode and temperature compensator probe.
   2. pH buffer solutions 4, 7 and 10.
*2. Procedures*
   1. The pH meter should be calibrated using the pH buffer solutions at the start of the work day.
   2. Put the electrode and temperature compensation probe in a beaker containing the slurry.
   3. Allow the reading to stabilize.
   4. Record the reading.
   5. Rinse electrode and temperature compensation probe after reading is recorded.

In application of the methods of the present invention to a natural mineral dispersed in a slurry, the slurry is preferably substantially dispersed at a pH of greater than 6.0, as measured by the in-process pH method. According to the methods of the present invention the slurry is dispersed in a range of about 10-75% solids. Most preferably, the slurry is maintained in the range of about 55-70% solids. The maximum particle size of the slurry is preferably about 325 mesh.

In application of the methods of the present invention to a synthetic mineral dispersed in a suspension, the suspension is dispersed in a range of about 10-75% solids and, more preferably, in a range of about 35-75% solids. Most preferably, the suspension is maintained in the range of about 55-70% solids and the maximum particle size of the suspension is preferably about 325 mesh.

A rotor-stator device that is capable of shearing the clay more intensively and impart a high shear to the clay slurry is contemplated for use according to the methods of the present invention, regardless of the application. Rotor-stator devices that impart the high shear typically achieve the shear achieved by a rotor blade tip speed of at least 50 feet per second, and usually in a range of about 50 to about 200 feet per second. Therefore any rotor device that can achieve a rotor blade tip speed of about 50 to about 200 feet per second can be utilized for processing the slurry according to the methods of this invention. Preferably, the mill should be capable of achieving a rotor tip speed of about 150 feet per second or 9000 feet per minute.

Rotor-stator devices capable of generating high shear and attaining rotor speeds necessary for processing slurry according to the methods of this invention include a rotor-stator type mill such as is manufactured by Kady International (Scarborough, Maine) (herein referred to as a "Kady mill") or for example, an "IMPEX mill," manufactured by Impex, (Milledgeville, Georgia). Other rotor-stator mills may also be used as long as they are capable of generating the high shear in the slurry being processed.

As those skilled in the art will recognize, a Kady-type mill is a dispersing device which includes a rotor and a correspondingly shaped stator. In this embodiment, the Kady-type mill is cooled to keep temperature of the mill in range where the milling process remains optimally effective.

An alternative to the Kady-type mill includes an IMPEX mill which is a conically shaped stator and a corresponding conically shaped rotor which define an adjustable gap. The cone configuration of the IMPEX type mill enables the placement of the rotor and stator in a closer relative physical proximity such that the viscosity of the slurry product produced is improved over that of the product processed using a conventional rotor-stator-type assembly. The adjustability of the gap between the rotor and stator of the assembly enable the mill to operate at an optimum energy efficiency while producing slurry products having an improved viscosity.

Cooling of the mill is accomplished by use of a fluid circulating medium such as water. Still other mechanisms for cooling the Kady-type dispersing mill of the present invention will be recognized by those skilled in the art.

The particulate in the substantially grit-free and substantially dispersed particulate slurry is selected from any one of a number of substances, depending on the type of slurry product desired. In one embodiment, the particulate is kaolin. In another embodiment, the particulate is a natural or ground calcium carbonate. In yet another embodiment, the particulate is precipitated calcium carbonate. In a further embodiment, the particulate is a synthetic substance such as a synthetic silica, a synthetic silicate or an alumino-silicate. In the preferred embodiment, the particulate is a kaolin clay. Examples of preferred kaolins include English platey clays such as SPS, Brazilian clays such as Capim DG or Capim NP, and Georgia clays such as DB-Kote 1, DB-Kote 2, DB-Plate and DB-Kote 90.

The first method for improving the high and low shear rheology of a natural mineral in substantially grit-free and substantially dispersed particulate slurry further includes the step of beneficiating the slurry product after milling the slurry using the rotor-stator type mill. As those skilled in the art recognize, beneficiation is the process of removing impurities, such as minerals and organic elements from the clay in the slurry. A number of processes recognized in the art are available for beneficiating the slurry. Among these processes are fractionation, calcination, flotation, selective flocculation, magnetic separation, grinding and leaching. Fractionation is the process of separating the clay feed stream into fine and coarse fraction product streams. Calcination is the process to heat the mineral to high temperatures to modify the crystal structure. Flotation is the process for separating impurities from clay using air or liquid media to separate the clay from the impurities on a differential weight basis. The selective flocculation process separates the clay and impurities into specified fractions as desired to produce particular products. Magnetic separation is the process for extracting titaniferous impurities from clay by use of a magnet. In grinding, the clay is ground to produce finer size particles. Leaching is the process of converting the ferric oxide to ferrous oxide so that it is soluble and removing the impurities from the surface of the clay. In this step, the beneficiation of the slurry product preferably performed by at least one process selected from the group consisting of fractionation, calcination, flotation, selective flocculation, magnetic separation, grinding and leaching.

Following beneficiation, the slurry product is at least partially dewatered to produce a filter cake. Dewatering can be carried out in one or more steps or stages. The filter cake produced by this process is then redispersed using dispersants comprised of a combination of one or more of the following components: phosphates, polyacrylates, sodium polyacrylates, soda ash, sodium hydroxide, and ammonium hydroxide. Moreover, where the filter cake is redispersed, the dispersant used is preferably formed of a combination of sodium polyacrylate and soda ash.

In this first method, following redispersion, the redispersed filter cake is further dewatered using one or more processes including evaporation and drying by apron or spray drying. The step of further dewatering the redispersed filter cake by evaporation preferably yields a slurry product having at least 30% solids, more preferably at least 50% solids and most preferably 60% solids. In a preferred embodiment, kaolin and ground calcium carbonate would be at least 60% solids while precipitated calcium carbonate and other synthetic materials would be at least 30% solids. Further dewatering by drying yields a slurry product having at least about 85-100% solids, or about 94-100% solids where dewatering is performed by apron or spray drying. The dried products can be mixed in water with a dispersant to yield a slurry.

In a second method for improving the high and low shear rheology of a natural mineral in substantially grit-free and substantially dispersed particulate slurry, the present invention includes the step of beneficiating the slurry prior to the step of milling the slurry using a rotor-stator type mill. According to this method of the present invention, the milled and beneficiated particulate slurry is dewatered in accordance with the processes described above. In this method, the step of dewatering the slurry yields a dewatered slurry product having at least about 60% solids, where the slurry is dewatered by evaporation, and between 85-100% solids where the slurry is apron or spray dried. Most preferably, the slurry yields a product having between 94-100% solids where the further dewatering is performed by spray drying. The dried products can be mixed in water with a dispersant to yield a slurry.

In a third method for improving the high and low shear rheology of a natural mineral in substantially grit-free and substantially dispersed particulate slurry, the present invention includes the step of beneficiating and partially dewatering the slurry using a filter prior to the step of milling the slurry using a rotor-stator type mill. According to this method, the beneficiated, partially dewatered and milled particulate slurry is further dewatered by evaporation or dried using an apron or spray dryer. This process yields slurry products having a 60% solids composition similar to the products produced in the method described above. The dried products are between 85 and 100 % solids, and preferably between 94 and 100 %. The dried products can be mixed with water and a dispersant to yield a slurry.

In a fourth method for improving the high and low shear rheology of a natural mineral in substantially grit-free and substantially dispersed particulate slurry, the present invention includes the step of beneficiating and then at least partially dewatering the slurry using a filter and evaporator prior to the step of milling the slurry using a rotor-stator type mill. The step of dewatering the slurry yields a product having at least 50% solids, where the slurry is dewatered by evaporation, and between 85-100% solids where the slurry is apron or spray dried. Most preferably, the product yields between 94-100% solids where further dewatering is performed by drying.

In the fifth method for improving the high and low shear rheology of a natural mineral in substantially grit-free and substantially dispersed particulate slurry, the present invention includes the step of beneficiating and then dewatering and drying the slurry using an apron or spray dryer. The dried product is then mixed with water and a dispersant to form a slurry which is then milled using a rotor-stator type mill.

The first method for improving the high and low shear rheology of a synthetic mineral in substantially grit-free and substantially dispersed particulate slurry further includes the step of beneficiating the slurry product after milling the slurry using the rotor-stator type mill. As those skilled in the art recognize, beneficiation is the process of removing impurities, such as minerals and organic elements from the clay in the slurry. A number of processes recognized in the art are available for beneficiating the slurry. Among these processes are fractionation, calcination, flotation, selective flocculation, magnetic separation, grinding and leaching. Fractionation is the process of separating the clay feed stream into fine and coarse fraction product streams. Calcination is the process to heat the mineral to high temperatures to modify the crystal structure. Flotation is the process for separating impurities from clay using air or liquid media to separate the clay from the impurities on a differential weight basis. The selective flocculation process separates the clay and impurities into specified fractions as desired to produce particular products. Magnetic separation is the process for extracting titaniferous impurities from clay by use of a magnet. In grinding, the clay is ground to produce finer size particles. Leaching is the process of converting the ferric oxide to ferrous oxide so that it is soluble and removing the impurities from the surface of the clay. In this step, the beneficiation of the slurry product preferably performed by at least one process selected from the group consisting of fractionation, calcination, flotation, selective flocculation, magnetic separation, grinding and leaching.

Following beneficiation, the slurry product is at least partially dewatered to produce a filter cake. The filter cake produced by this process is then redispersed using dispersants comprised of a combination of one or more of the following components: phosphates, polyacrylates, sodium polyacrylates, soda ash, sodium hydroxide, and ammonium hydroxide. Moreover, where the filter cake is redispersed, the dispersant used is preferably formed of a combination of sodium polyacrylate and soda ash.

In this first method, following redispersion, the redispersed filter cake is further dewatered using one or more processes including evaporation and drying by apron or spray drying. The step of further dewatering the redispersed filter cake by evaporation preferably yields a slurry product having at least 60% solids. Further dewatering by drying yields a slurry product having at least about 85-100% solids, or about 94-100% solids where dewatering is performed by apron or spray drying. The dried products can be mixed in water with a dispersant to yield a slurry.

In a second method for improving the high and low shear rheology of a synthetic mineral in substantially grit-free and substantially dispersed particulate slurry, the present invention includes the step of beneficiating the slurry prior to the step of milling the slurry using a rotor-stator type mill. According to this method of the present invention, the milled and beneficiated particulate slurry is dewatered in accordance with the processes described above. In this method, the step of dewatering the slurry yields a dewatered slurry product having at least about 60% solids, where the slurry is dewatered by evaporation, and between 85-100% solids where the slurry is apron or spray dried. Most preferably, the slurry yields a product having between 94-100% solids where the further dewatering is performed by spray drying. The dried products can be mixed in water with a dispersant to yield a slurry.

In a third method for improving the high and low shear rheology of a synthetic mineral in substantially grit-free and substantially dispersed particulate slurry, the present invention includes the step of beneficiating and partially dewatering the slurry using a filter prior to the step of milling the slurry using a rotor-stator type mill. According to this method, the beneficiated, partially dewatered and milled particulate slurry is further dewatered by evaporation or dried using an apron or spray dryer. This process yields slurry products having a 60% solids composition similar to the products produced in the method described above. The dried products can be mixed in water with a dispersant to yield a slurry.

In a fourth method for improving the high and low shear rheology of a synthetic mineral in substantially grit-free and substantially dispersed particulate slurry, the present invention includes the step of beneficiating and then at least partially dewatering the slurry using a filter and evaporator prior to the step of milling the slurry using a rotor-stator type mill. The step of dewatering the slurry yields a product having at least 60% solids, where the slurry is dewatered by evaporation, and between 85-100% solids where the slurry is apron or spray dried. Most preferably, the slurry yields a product having between 94-100% solids where the further dewatering is performed by drying.

In the fifth method for improving the high and low shear rheology of a synthetic mineral in substantially grit-free and substantially dispersed particulate slurry, the present invention includes the step of beneficiating and then dewatering and drying the slurry using an apron or spray dryer. The dried product is then mixed with water and a dispersant to form a slurry which is then milled using a rotor-stator type mill.

Although the present invention has been described with reference to specific details of certain embodiments thereof, it is not intended that such details should be regarded as limitations upon the scope of the invention except as and to the extent that they are included in the accompanying claims.

### EXAMPLES

### EXAMPLE I

The acid flocculated and dried SPS was dispersed with a blend of sodium polyacrylate and soda ash at about pH = 8 at various solids concentrations. The 0.5-gallon samples were milled/liquid worked in a Kady mill for 20 minutes. The samples were then dried in an air oven overnight keeping the temperature below 75°C. Each milled sample was checked for Brookfield and Hercules viscosity at approximately 65% solids and for particle size on the Sedigraph. The results of this work are summarized in the table below.

| | **As is SPS** | **Kady Mill Solids (%)** | | | |
|---|---|---|---|---|---|
| | | **30** | **40** | **50** | **55** |
| **Brookfield Viscosity, cp @ 20 RPM** | 1580 | 1605 | 1090 | 1375 | 475 |
| **Hercules Viscosity @ 18 Dynes, RPM** | 155 | 220 | 375 | 890 | 900 |
| **Viscosity Solids, %** | 65.0 | 65.0 | 65.0 | 65.0 | 64.6 |
| **Particle Size** | | | | | |
| **- % < 5µ** | 97 | 97 | 97 | 97 | 97 |
| **- % < 2µ** | 76 | 78 | 78 | 77 | 78 |
| **- % < 1µ** | 57 | 59 | 60 | 59 | 61 |
| **- % < 0.5µ** | 33 | 37 | 38 | 39 | 40 |
| **- % < 0.2µ** | 8 | 13 | 14 | 16 | 17 |

The results suggest that the Brookfield, as well as Hercules viscosity, is improved by Kady milling the kaolin sample.

### EXAMPLE II

A spray dried sample of Capim NP was dispersed at 62% solids in water. The 0.5-gallon samples were milled/liquid worked in a Kady mill for 10 minutes and 20 minutes. The samples were then dried in an air oven overnight keeping the temperature below 75°C. Each milled sample was checked for Brookfield and Hercules viscosity at approximately 67% solids and for particle size on the Sedigraph. The results of this work are summarized in the table below.

| | **Spray Dried Capim NP** | **Kady Milling Time** | |
|---|---|---|---|
| | | **10 Minutes** | **20 Minutes** |
| **Brookfield Viscosity, cp @ 20 RPM** | 210 | 135 | 135 |
| **Hercules Viscosity, RPM @ 18 Dynes or Dynes @ 1100 RPM** | 580 RPM | 9.4 Dynes | 7.0 Dynes |
| **Viscosity Solids, %** | 67.3 | 67.2 | 67.0 |
| **Particle Size** | | | |
| **- % < 5µ** | 98 | 99 | 98 |
| **- % < 2µ** | 81 | 81 | 81 |
| **- % < 1µ** | 59 | 60 | 60 |
| **- % < 0.5µ** | 35 | 36 | 36 |
| **- % < 0.2µ** | 11 | 12 | 11 |

The results show that the Brookfield and Hercules viscosity is improved by Kady milling the kaolin sample.

### EXAMPLE III

The processing is the same as in Example II except the product is Capim DG at 65% solids and viscosity testing was done at approximately 70% solids.

| | **Spray Dried Capim DG** | **Kady Milling Time** | |
|---|---|---|---|
| | | **10 Minutes** | **20 Minutes** |
| **Brookfield Viscosity, cp @ 20 RPM** | 305 | 250 | 215 |
| **Hercules Viscosity, RPM @ 18 Dynes or Dynes @ 1100 RPM** | 880 RPM | 1100 RPM | 12.2 Dynes |
| **Viscosity Solids, %** | 70.0 | 70.1 | 70.2 |
| **Particle Size** | | | |
| **- % < 5µ** | 99 | 99 | 99 |
| **- % < 2µ** | 90 | 90 | 90 |
| **- % < 1µ** | 73 | 73 | 73 |
| **- % < 0.5µ** | 47 | 47 | 47 |
| **- % < 0.2µ** | 13 | 13 | 17 |

These results also show that the Brookfield and Hercules viscosity is improved by Kady milling the kaolin sample with none or insignificant change in measured particle size.

### EXAMPLE IV

A sample of DB-Plate re-blunged filter cake was obtained from the plant at 51.6% solids. Half-gallon samples of this material were Kady milled at 5 minutes, 10 minutes, and 20 minutes. A control sample was also run without subjecting it to Kady milling. The samples were then dried in an air oven overnight keeping the temperature below 75°C. Each sample was checked for Brookfield and Hercules viscosity at approximately 67% solids and for particle size on the Sedigraph. The results of this work are summarized in table below.

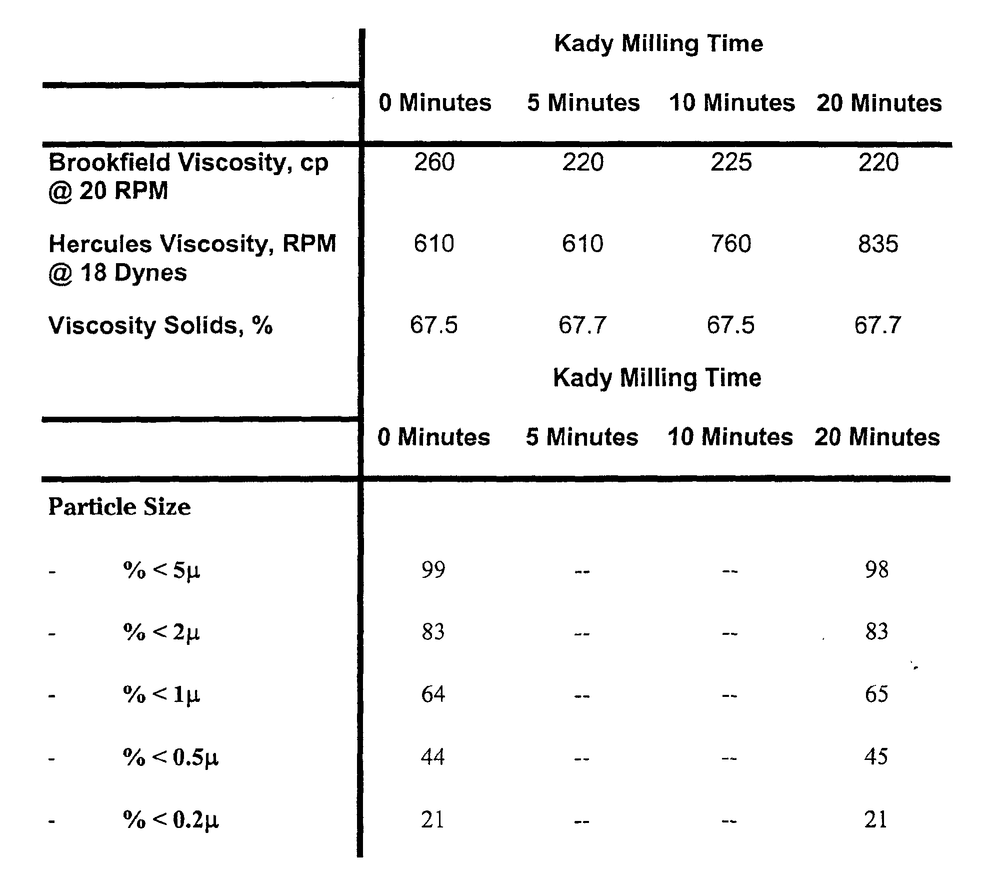

Again, these results are similar to results in Examples II and III.

## Claims

1. A method for improving the high and low shear rheology of a substantially grit-free and substantially fluid particulate suspension, the method comprising the step of processing the suspension using a rotor-stator mill to produce a product.

2. The method of Claim 1 wherein the fluid particulate suspension is a substantially dispersed particulate slurry.

3. The method of Claims 1 or 2 wherein the slurry or suspension is substantially dispersed in a dispersant and water at an alkaline pH before it is milled in the rotor-stator mill.

4. The method of Claim 3 wherein the dispersant is selected from the group consisting of phosphates, polyacrylates, silicates, sulfonates and ligno-sulfates.

5. The method of Claim 3 wherein the alkaline substance is selected from the group consisting at least of soda ash, sodium hydroxide and ammonium hydroxide.

6. The method of Claim 3 wherein the suspension or slurry is substantially dispersed in sodium polyacrylate, soda ash and water.

7. The method of Claim 3 wherein the suspension or slurry is substantially dispersed at a pH of greater than 6.0, as measured by a in-process pH method.

8. The method of Claim 3 wherein the suspension or slurry is substantially dispersed at about 10-75% solids.

9. The method of Claim 3 wherein the suspension or slurry is substantially dispersed at about 55-70% solids.

10. The method of Claims 1 or 2 wherein the suspension or slurry has a maximum particle size of about 325 mesh.

11. The method of Claims 1 or 2 wherein the mill for processing the suspension or slurry is a Kady-type mill.

12. The method of Claims 1 or 2 wherein the mill for processing the suspension or slurry includes a conically shaped stator and a corresponding conically shaped rotor.

13. The method of Claims 1 or 2 wherein the mill for processing the suspension or slurry includes a stator and correspondingly shaped rotor which define a gap that is adjustable to provide optimum efficiency as the suspension or slurry is processed to produce the product.

14. The method of Claims 1 or 2 further comprising the step of beneficiating the suspension or slurry product.

15. The method of Claim 14 further comprising the step of re-milling the beneficiated suspension or slurry product.

16. The method of Claims 1 or 2 further comprising the step of at least partially beneficiating the suspension or slurry prior to and/or following the step of milling the suspension or slurry.

17. The method of Claims 1 or 2 further comprising the step of at least partially dewatering the suspension or slurry prior to the step of milling the suspension or slurry.

18. The method of Claim 17 further comprising the step of beneficiating the suspension or slurry prior to the step of dewatering the suspension or slurry.

19. The method of Claims 14, 16 or 18 wherein the step of beneficiating the suspension or slurry product comprises performing at least one process selected from the group consisting of fractionation, flotation, selective flocculation, magnetic separation, grinding and leaching.

20. The method of Claims 14, 16 or 18 further comprising the steps of at least partially dewatering the suspension or slurry product to produce a filter cake and redispersing the filter cake to form a suspension or slurry.

21. The method of Claim 20 further comprising the step of re-milling the redispersed filter cake.

22. The method of Claim 20 further comprising the step of removing additional water from the redispersed filter cake by a process selected from the group consisting at least of evaporation and drying.

23. The method of Claim 20 wherein the step of at least partially dewatering the suspension or slurry yields a dewatered product having up to about 75% solids.

24. The method of Claim 22 wherein the additional water is removed from the suspension or slurry by the process of evaporation.

25. The method of Claim 24 further comprising the step of re-milling the evaporated suspension or slurry product.

26. The method of Claim 24 wherein evaporation yields a suspension or slurry product having at least about 30% solids.

27. The method of Claim 24 wherein evaporation yields a suspension or slurry product having at least about 60% solids.

28. The method of Claim 22 wherein the additional water is removed from the suspension or slurry by the process of drying.

29. The method of Claim 28 wherein drying yields a suspension or slurry product having about 85-100% solids.

30. The method of Claim 22 wherein the additional water is removed from the suspension or slurry by the process of spray drying.

31. The method of Claim 30 wherein spray drying yields a product having about 94-100% solids.

32. The method of Claims 14, 16, or 18 wherein the particulate comprises a substantially white pigment.

33. The method of Claims 14, 16 or 18 wherein the particulate comprises a kaolin clay.

34. The method of Claims 14, 16 or 18 wherein the particulate comprises calcium carbonate.

35. The method of Claims 14, 16 or 18 wherein the particulate comprises precipitated calcium carbonate.

36. The method of Claims 14, 16 or 18 wherein the particulate comprises a synthetic silica.

37. The method of Claims 14, 16 or 18 wherein the particulate comprises a synthetic silicate.

38. The method of Claims 14, 16 or 18 wherein the particulate comprises an alumino-silicate.

39. The method of Claim 2 wherein the substantially grit-free and substantially dispersed particulate slurry is formed by a direct precipitation process.

40. The method of Claim 14 wherein the suspension or slurry is dewatered and redispersed.

41. The method of Claim 3 wherein the suspension is substantially dispersed at about 30-75% solids.

42. A product made by the method of any of the preceding claims.
